# EUROPÄISCHE PATENTSCHRIFT

(11) **EP 1 036 974 B1**
(45) Veröffentlichungstag und Bekanntmachung des Hinweises auf die Patenterteilung: **12.05.2004**
(21) Anmeldenummer: 00104616.8
(22) Anmeldetag: 03.03.2000
(51) Int. Cl.: F16L 47/00, F16L 41/02

(54) **Verbindungsstück aus thermoplastischem Kunststoff für Rohrleitungen einer Erdsondenanlage**
Thermoplastic connecting piece for pipelines of a ground probe system
Elément de raccordement pour tuyaux d'une installation de sonde souterraine

(30) Priorität: 16.03.1999 CH 48099
(43) Veröffentlichungstag der Anmeldung: 20.09.2000
(73) Patentinhaber: HAKA.Gerodur AG, 9201 Gossau SG (CH)
(72) Erfinder: Luder, Fritz, 8360 Eschlikon (CH); Mayer, Peter, 8717 Benken (CH)
(74) Vertreter: Patentanwälte Schaad, Balass, Menzl & Partner AG

(56) Entgegenhaltungen:
- EP-A- 0 582 118
- WO-A-98/25069
- GB-A- 1 147 385
- US-A- 2 656 853
- US-A- 3 291 670
- US-A- 3 470 943
- US-A- 3 677 301

## Beschreibung

Die Erfindung betrifft ein Verbindungsstück aus thermoplastischem Kunststoff für für flüssige Wärmeträger bestimmte Rohrleitungen einer Erdsondenanlage.

Erdsonden werden zur Ausnutzung der Erdwärme als Wärmetauscher in den Boden eingesetzt. Ein flüssiger Wärmeträger wird von einem ersten Sondenkopf über ein Sonden-Zulaufrohr zu einem Sondenfuss geführt, dort umgelenkt, und über ein Sonden-Rücklaufrohr zu einem zweiten Sondenkopf geführt. Die beiden Sondenköpfe sind über ein Sammelzulaufrohr bzw. über ein Sammelrücklaufrohr an eine Wärmepumpe angeschlossen. In der Regel wird in ein Bohrloch ein Erdsondenpaar eingesetzt, dem die beiden Sondenköpfe gemeinsam sind.

Aus der CH-PS 687 268 ist ein ein Sonden-Zulaufrohr mit einem Sonden-Rücklaufrohr verbindender Sondenfuss für eine Erdsonde bekannt. Es handelt sich bei diesem Sondenfuss um ein im wesentlichen um 180° umgelenktes Kunststoffrohr, das in einem Extrusionsblasverfahren hergestellt wird. Nach diesem Verfahren kann ein Sondenfuss dieser Art in grossen Stückzahlen nicht wirtschaftlich hergestellt werden.

In EP 0 582 118 wird ein Verbindungsstück aus Kunststoff für für flüssige Wärmeträger bestimmte Rohrleitungen einer Erdsondenanlage beschrieben. Das Verbindungsstück weist im Wesentlichen eine Y-Form auf und umfasst 3 parallel verlaufende Rohrabschnitte, von denen der eine Rohrabschnitt den Y-Stammteil bildet, mit dem die beiden anderen die Y-Schenkel bildenden Rohrabschnitte über je einen bogenförmigen Rohrteil verbunden sind.

In US 3,470,943 wird ebenfalls ein Y-förmiges Verbindungsstück beschrieben.

Der vorliegenden Erfindung liegt die Aufgabe zugrunde, einen Sondenfuss zu schaffen, der in grossen Stückzahlen wirtschaftlich gefertigt werden kann und eine hohe Lebensdauer der Rohrleitungsverbindung sicherstellt.

Diese Aufgabe wird erfindungsgemäss durch ein Verbindungsstück mit den Merkmalen des Anspruches 1 gelöst.

Bevorzugte Weiterausgestaltungen des erfindungsgemässen Verbindungsstückes bilden den Gegenstand der abhängigen Ansprüche.

Ein besonderer Vorteil des erfindungsgemässen Verbindungsstückes liegt in seiner universellen Einsetzbarkeit. Das Verbindungsstück bildet einen Sondenfuss . Als ein Sondenfuss mit einem Stopfen ausgestattet ermöglicht das Verbindungsstück bei besonders bevorzugten Ausgestaltungen des Stopfens erleichtertes Einbringen der Erdsonde in das Bohrloch, wobei eine richtige Lotstellung der Erdsonde und ein Schutz derselben vor Beschädigung gewährleistet werden.

Die Erfindung wird im folgenden anhand der Zeichnung näher erläutert.

Es zeigen:
- Fig. 1: ein erstes Ausführungsbeispiel eines Verbindungsstückes im Längsschnitt;
- Fig. 2: ein Ausführungsbeispiel eines Stopfens für das als ein Sondenfuss einsetzbare Verbindungsstück nach Fig. 1;
- Fig. 3: den Stopfen nach Fig. 2 in Draufsicht;
- Fig. 4: einen Schnitt nach Linie IV-IV nach Fig. 2;
- Fig. 5: im Längsschnitt ein erstes Ausführungsbeispiel eines Sondenfusses mit dem Verbindungsstück nach Fig. 1 und mit dem Stopfen nach Fig. 2 bis 4;
- Fig. 6: im Längsschnitt ein zweites Ausführungsbeispiel eines Sondenfusses mit dem Verbindungsstück nach Fig. 1 und mit dem Stopfen nach Fig. 2 bis 4; und

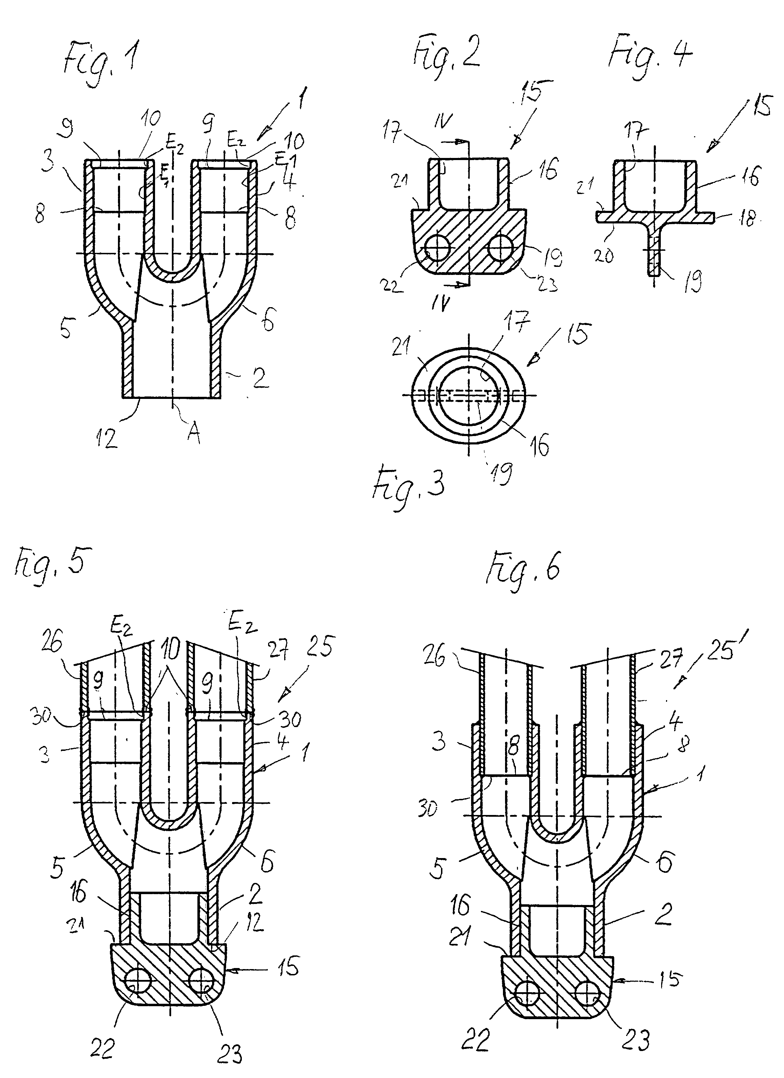

Fig. 1 zeigt ein Verbindungsstück 1 für Rohrleitungen einer Erdsondenanlage, das aus thermoplastischem Kunststoff, beispielsweise aus Polyolefin, vorzugsweise aus Polyethylen einstückig in einem Spritzgussverfahren hergestellt wird. Das Verbindungsstück 1 ist im wesentlichen Y-förmig ausgebildet und weist drei parallele Rohrabschnitte 2, 3, 4 auf, von denen der eine Rohrabschnitt 2 den Y-Stammteil bildet. Die beiden anderen Rohrabschnitte 3, 4 sind über je einen bogenförmigen Rohrteil 5, 6 mit dem den Y-Stammteil bildenden Rohrabschnitt 2 verbunden und bilden zusammen mit den letzteren die Schenkel des Y-förmigen Verbindungsstückes 1.

Beim in Fig. 1 dargestellten Ausführungsbeispiel ist der Durchmesser bzw. der freie Rohrquerschnitt des den Y-Stammteil bildenden Rohrabschnittes 2 grösser als der Durchmesser bzw. der freie Rohrquerschnitt der die Y-Schenkel bildenden Rohrabschnitte 3, 4. Diese beiden Rohrabschnitte 3, 4 sind symmetrisch zu einer in Fig. 1 mit A bezeichneten Achse des Y-Stammteiles angeordnet.

Der Innendurchmesser der die Y-Schenkel bildenden Rohrabschnitte 3, 4 ist zum freien Ende dieser Rohrabschnitte 3, 4 hin in zwei Stufen erweitert, wodurch jeder Rohrabschnitt 3, 4 im Innern eine erste Absatzfläche 8 und eine zweite Absatzfläche 9 aufweist. Die erste Erweiterung ist in Fig.1 mit E₁, die zweite mit E₂ bezeichnet. Die Stirnflächen der die Y-Schenkel bildenden Rohrabschnitte 3, 4 sind mit 10 bezeichnet und liegen gegebenenfalls in der gleichen Ebene. Die Stirnfläche des den Y-Stammteil bildenden Rohrabschnittes 2 ist mit 12 bezeichnet.

Gemäss Fig. 2 ist ein Stopfen 15 mit einem zylindrischen Teil 16 ausgestattet, dessen Aussendurchmesser um das schweisstechnisch erforderliche Mass grösser oder gleich dem Durchmesser des den Y-Stammteil bildenden Rohrabschnittes 2 ist. Der zylindrische Teil 16 weist eine nach oben offene Ausnehmung 17 auf. Der Stopfen 15 weist ferner einen sich rechtwinklig zum zylindrischen Teil 16 erstreckenden Bodenteil 18 auf. Auf der dem zylindrischen Teil 16 abgewandten Seite ist der Bodenteil 18 mit einer Lasche 19 verbunden. Der Bodenteil 18, die Lasche 19 und der zylindrische bzw. hohlzylindrische Teil 16 sind einstückig ausgebildet. Der Stopfen 15 wird mit Vorteil ebenfalls im Spritzgussverfahren aus thermoplastischen Kunststoff hergestellt. Der Bodenteil 18 ist im Grundriss ovalförmig ausgebildet und weist eine untere Fläche 20 sowie eine obere, den zylindrischen Teil 16 umgebende Absatzfläche 21 auf. Die Ovallänge bzw. die Oval-Hauptachse ist grösser, als der Aussendurchmesser des den Y-Stammteil bildenden Rohrabschnittes 2, die Ovalbreite bzw. die Oval-Nebenachse entspricht demselben. Die sich über die Ovallänge des Bodenteils 18 erstreckende, rechtwinklig zu dieser Ovallänge gesehen nur schmale Lasche 19 ist mit zwei Bohrungen 22, 23 versehen und weist eine sich nach unten leicht verjüngende Form mit gerundeten Ecken auf.

Gemäss Fig. 5 und 6 bildet das vorstehend beschriebene Verbindungsstück 1 zusammen mit dem Stopfen 15 einen sogenannten Sondenfuss 25 (Fig. 5) bzw. 25' (Fig. 6), der ein Sonden-Zulaufrohr 26 mit einem Sonden-Rücklaufrohr 27 verbindet, und in welchem ein flüssiger Wärmeträger vom Sonden-Zulaufrohr 26 zum Sonden-Rücklaufrohr 27 umgelenkt wird. Der Stopfen 15 ist mit seinem zylindrischen Teil 16 in das Innere des den Y-Stammteil bildenden Rohrabschnittes 2 eingesetzt. Der Bodenteil 18 überragt in seiner Ovallänge die Stirnfläche 12. Der Stopfen 15 und der den Y-Stammteil bildende Rohrabschnitt 2 werden miteinander verschweisst oder verklebt. In besonders bevorzugter Weise werden die beiden Teile im Heizelement-Muffenschweissverfahren miteinander verbunden.

Das Sonden-Zulaufrohr 26 und das Sonden-Rücklaufrohr 27 werden vorzugsweise mit den die Y-Schenkel bildenden Rohrabschnitten 3, 4 ebenfalls verschweisst. Dabei ermöglicht die stufenförmige Erweiterung des Innendurchmessers dieser beiden Rohrabschnitte 3, 4 sowohl ein Heizelement-Stumpfschweissverfahren, als auch ein Heizelement-Muffenschweissverfahren des jeweiligen Sonden-Rohres 26 bzw. 27 mit dem entsprechenden Rohrabschnitt 3 bzw. 4. Eine Verbindung durch Kleben wäre allerdings ebenfalls möglich.

Fig. 5 zeigt die mittels des Heizelement-Stumpfschweissverfahrens hergestellte Verbindung zwischen den Stirnflächen 10 der Verbindungsstück-Rohrabschnitte 3, 4 und Stirnflächen 30 der Sonden-Rohre 26, 27. Die Dicke der Sonden-Rohrwand entspricht dabei der Dicke der Rohrabschnittwand im Bereich der zweiten Erweiterung E₂, die sich zwischen der Absatzfläche 9 und der Stirnfläche 10 erstreckt.

In Fig. 6 ist die mittels des Heizelement-Muffenschweissverfahrens hergestellte Verbindung der Sondenrohre 26, 27 mit den Verbindungsstück-Rohrabschnitten 3, 4 dargestellt. In diesem Fall weisen die Sondenrohre 26, 27 eine dünnere Wand auf als die zugehörigen Rohrabschnitte 3, 4 des Verbindungsstückes 1. Die Sondenrohre 26, 27 ragen in die Rohrabschnitte 3, 4 hinein. Die Schweissverbindung erfolgt an der Umfangs-Berührungsfläche zwischen dem jeweiligen Sondenrohr 26, 27 und dem Verbindungdsstück-Rohrabschnitt 3, 4, in dem sich überlappenden Bereich der beiden zu verbindenden Teile.

Der Durchfluss des flüssigen Wärmeträgers beim Durchströmen durch den Sondenfuss 25, 25' wird weder bei der Verbindungsart nach Fig. 5, noch bei der Verbindungsart nach Fig. 6 an der Verbindungsstelle nennenswert beeinträchtigt.

Die erfindungsgemässe Ausgestaltung des Sondenfusses ermöglicht, dass in ein Bohrloch eines bestimmten Durchmessers eine Erdsonde bzw. ein Erdsondenpaar mit relativ grossen Rohrdurchmessern eingeführt werden kann. Das Einführen der Erdsonde in das Bohrloch ist durch die Y-Form des Sondenfusses und das Vorhandensein des Stopfens 15 besonders erleichtert. Die Lasche 19 des Stopfens 15 wirkt als ein das Einbringen der Erdsonde in das Bohrloch erleichterndes Stosselement. Der Stopfen 15 schützt mit seinem Bodenteil 18 die Erdsonde vor einer Beschädigung während des Einbringens in das Bohrloch. Die Ovalform des Bodenteiles 18 ermöglicht eine möglichst nahe Anordnung und Schutz beider Erdsonden eines Erdsondenpaares. Die Bohrungen 22, 23 in der Lasche 19 ermöglichen das Anbringen eines Gewichtes am tiefsten Punkt des Sondenfusses, das dem Auftrieb entgegenwirkt, der durch die im Bohrloch in der Regel vorhandene Flüssigkeit bewirkt wird. Ausserdem trägt das Gewicht dazu bei, dass die Erdsonde beim Einbringen gerade, d.h. lotrecht bleibt. Selbstverständlich könnte der Stopfen statt zwei auch nur eine Bohrung zur Befestigungs des Gewichtes aufweisen, oder mit anderen Mitteln zum Anbringen des Gewichtes ausgestattet oder anders beschwert sein.

Das erfindungsgemässe, im Spritzgussverfahren hergestellte Verbindungsstück 1 weist hohe mechanische Festigkeit auf, so dass bei seiner Verwendung als ein im Bohrloch jahrzentelang ohne Wartung verbleibender Sondenfuss die erforderliche Lebensdauer sicherstellt wird.

Die drei Rohrabschnitte 2, 3, 4 des Y-förmig ausgebildeten Verbindungsstückes 1 könnten in ihrer Form und in Massverhältnissen durchaus vom dargestellten Ausführungsbeispiel abweichen. So könnte insbesondere bei der Verwendung des Verbindungsstückes 1 als Sondenfuss der Durchmesser bzw. der freie Rohrquerschnitt der die Y-Schenkel bildenden Rohrabschnitte 3, 4 gleich sein, wie der Stammteil-Durchmesser bzw. der freie Rohrquerschnitt des Stammteiles. Auch eine symmetrische Ausbildung der Schenkel ist nicht zwingend notwendig. Die die Y-Schenkel bildenden Rohrabschnitte 3, 4 könnten auch unterschiedlich lang sein, wodurch die Zugänglichkeit zu den Verbindungsstellen verbessert werden könnte (mehr Platz für die Durchführung einer Schweissverbindung).

Für die Herstellung der Verbindungsstücke 1 im Spritzgussverfahren ist beispielsweise Polyethylen PE 100 besonders geeignet.

## Patentansprüche

1. Verbindungsstück aus thermoplastischem Kunststoff für für flüssige Wärmeträger bestimmte Rohrleitungen einer Erdsondeanlage, wobei das Verbindungsstück (1) im wesentlichen eine Y-Form aufweist und drei parallel verlaufende Rohrabschnitte (2,3,4) umfasst, von denen der eine Rohrabschnitt (2) den Y-Stammteil bildet, mit dem die beiden anderen, die Y-Schenkel bildenden Rohrabschnitte (3,4) über je einen bogenförmigen Rohrteil (5,6) verbunden sind und das Verbindungsstück (1), das einen Sondenfuss (25,25') bildet, im Spitzgussverfahren hergestellt ist, und einer der die Y-Schenkel bildenden Rohrabschnitte (3) dazu bestimmt ist, mit einem Sonden-Zulaufrohr (26) verbunden zu werden, und der andere Rohrabschnitt (4) dazu bestimmt ist, mit einem Sonden-Rücklaufrohr (27) verbunden zu werden, **dadurch gekennzeichnet, dass** der den Y-Stammteil bildende Rohrabschnitt (2) mittels eines Stopfens (15) verschlossen ist.

2. Verbindungsstück gemäss Anspruch 1, **dadurch gekennzeichnet, dass** die die Y-Schenkel bildenden Rohrabschnitte (3,4) mit dem Sondenzulaufrohr (26) respektive Sondenrücklaufrohr mittels Schweissen verbunden sind.

3. Verbindungsstück nach einem der Ansprüche 1 bis 2, **dadurch gekennzeichnet, dass** die die zwei Y-Schenkel bildenden Rohrabschnitte (3, 4) symmetrisch zur Achse (A) des den Y-Stammteil bildenden Rohrabschnittes (2) angeordnet sind.

4. Verbindungsstück nach einem der Ansprüche 1-3, **dadurch gekennzeichnet, dass** der Stopfen (15) einen zylindrischen Teil (16) sowie einen sich rechtwinklig zu diesem Teil (16) erstreckenden Bodenteil (18) aufweist, wobei der Stopfen (15) mit dem zylindrischen Teil (16) in das Innere des den Y-Stammteil bildenden Rohrabschnittes (2) hineinragt und an den Berührungsflächen mit dem Rohrabschnitt (2) mit diesem fest verbunden, vorzugsweise verschweisst ist.

5. Verbindungsstück nach einem der Ansprüche 1 bis 4, **dadurch gekennzeichnet, dass** der Stopfen (15) mit einer als ein Stosselement beim Einbringen der Erdsonde in ein Bohrloch wirkenden Lasche (19) versehen ist.

6. Verbindungsstück nach Anspruch 5, **dadurch gekennzeichnet, dass** die Lasche (19) mit Mitteln (22, 23) zum Anbringen eines Gewichtes versehen ist.

7. Verbindungsstück nach einem der Ansprüche 1 bis 6, **dadurch gekennzeichnet, dass** der Bodenteil (18) ovalförmig ausgebildet ist, wobei die Oval-Hauptachse grösser ist, als der Aussendurchmesser des den Y-Stammteil bildenden Rohrabschnittes (2) und die Oval-Nebenachse im wesentlichen diesem Aussendurchmesser entspricht.

8. Verbindungsstück nach einem der Ansprüche 1 bis 7, **dadurch gekennzeichnet, dass** der Innendurchmesser der die Y-Schenkel bildenden Rohrabschnitte (3, 4) zum freien Ende der Rohrabschnitte (3, 4) hin in mindestens einer (E₁), vorzugsweise in zwei Stufen (E₁, E₂) erweitert ist.

9. Verbindungsstück nach einem der Ansprüche 1 bis 7, **dadurch gekennzeichnet, dass** der den Y-Stammteil bildende Rohrabschnitt (2) und/oder die die Y-Schenkel bildenden Rohrabschnitte (3, 4) im Aussendurchmesser zum freien Ende der Rohrabschnitte (2, 3, 4) hin abgesetzt sind.

10. Verbindungsstück nach einem der Ansprüche 1 bis 9, **dadurch gekennzeichnet, dass** es aus Polyethylen, vorzugsweise aus PE 100 hergestellt ist.

## Claims

1. Thermoplastic connecting piece for pipelines of a ground probe system which are intended for liquid heat transfer media, the connecting piece (1) essentially having a Y shape and comprising three pipe sections (2, 3, 4) running in parallel, of which the one pipe section (2) forms the Y stem part, to which the two other pipe sections (3, 4) forming the Y legs are connected via a respective curved pipe part (5, 6), and the connecting piece (1), which forms a probe foot (25, 25'), being produced by the injection moulding process, and one of the pipe sections (3) which form the Y legs being intended to be connected to a probe feed pipe (26), and the other pipe section (4) being intended to be connected to a probe return pipe (27), **characterized in that** the pipe section (2) forming the Y stem part is closed by means of a plug (15).

2. Connecting piece according to Claim 1, **characterized in that** the pipe sections (3, 4) forming the Y legs are connected to the probe feed pipe (26) and probe return pipe, respectively, by means of welding.

3. Connecting piece according to either of Claims 1 and 2, **characterized in that** the pipe sections (3, 4) forming the two Y legs are arranged symmetrically to the axis (A) of the pipe section (2) forming the Y stem part.

4. Connecting piece according to one of Claims 1 to 3, **characterized in that** the plug (15) has a cylindrical part (16) and a base part (18) extending at right angles to this part (16), the plug (15) projecting with the cylindrical part (16) into the interior of the pipe section (2) which forms the Y stem part and being firmly connected, preferably welded, to the pipe section (2) at the contact surfaces with the said pipe section (2).

5. Coupling piece according to one of Claims 1 to 4, **characterized in that** the plug (15) is provided with a lug (19) acting as an abutment element when the ground probe is inserted into a borehole.

6. Connecting piece according to Claim 5, **characterized in that** the lug (19) is provided with means (22, 23) for attaching a weight.

7. Connecting piece according to one of Claims 1 to 6, **characterized in that** the base part (18) is of oval-shaped design, the oval main axis being greater than the outside diameter of the pipe section (2) forming the Y stem part, and the oval secondary axis essentially corresponding to this outside diameter.

8. Connecting piece according to one of Claims 1 to 7, **characterized in that** the inside diameter of the pipe sections (3, 4) forming the Y legs is widened towards the free end of the pipe sections (3, 4) in at least one step (E₁), preferably in two steps (E₁, E₂).

9. Connecting piece according to one of Claims 1 to 7, **characterized in that** the pipe section (2) forming the Y stem part and/or the pipe sections (3, 4) forming the Y legs are stepped in outside diameter towards the free end of the pipe sections (2, 3, 4).

10. Connecting piece according to one of Claims 1 to 9, **characterized in that** it is made of polyethylene, preferably of PE 100.

## Revendications

1. Elément de raccordement en matière synthétique thermoplastique, pour des tuyauteries conçues pour des liquides caloporteurs, d'une installation de sonde terrestre, où l'élément de raccordement (1) présente sensiblement une forme en Y et comprend trois tronçons tubulaires (2, 3, 4) s'étendant parallèlement, dont l'un, un tronçon tubulaire (2) forme la partie tronc du Y, auxquels sont reliés les deux autres tronçons tubulaires (3, 4) formant les branches du Y, la liaison se faisant chaque fois par une partie tubulaire (5, 6) à forme arquée, et l'élément de raccordement (1), formant un pied de sonde (25, 25') étant fabriqué par un procédé de moulage par injection, et l'un des tronçons tubulaires (3), formant les branches du Y, étant conçu pour être relié à un tuyau d'amenée de sonde (26), et l'autre tronçon tubulaire (4) étant conçu pour être relié à un tuyau de retour de sonde (27), **caractérisé en ce que** le tronçon tubulaire (2) formant la partie tronc de Y est fermé au moyen d'un bouchon (15).

2. Elément de raccordement selon la revendication 1, **caractérisé en ce que** les tronçons tubulaires (3, 4) formant les branches de Y sont reliés par soudage au tube d'amenée à la sonde (26), respectivement au tube de retour de sonde.

3. Elément de raccordement selon l'une des revendications 1 à 2, **caractérisé en ce que** les tronçons tubulaires (3, 4), formant les deux branches de Y, sont disposés symétriquement par rapport à l'axe (A) du tronçon tubulaire (2) formant la partie tronc du Y.

4. Elément de raccordement selon l'une des revendications 1 à 3, **caractérisé en ce que** le bouchon (15) présente une partie cylindrique (16), ainsi qu'une partie fond (18) s'étendant à angle droit par rapport à cette partie (16), le bouchon (15) pénétrant, par la partie cylindrique(16), à l'intérieur du tronçon tubulaire (2) formant la partie de tronc de Y et étant relié rigidement, aux faces de contact au tronçon tubulaire (2), à celui-ci, de préférence par soudure.

5. Elément de raccordement selon l'une des revendications 1 à 4, **caractérisé en ce que** le bouchon (15) est muni d'une patte (19), agissant sous forme d'élément percuteur lors de l'introduction d'une sonde terrestre dans un trou de forage.

6. Elément de raccordement selon la revendication 5, **caractérisé en ce que** la patte (19) est munie de moyens (22, 23) pour le montage d'une masse.

7. Elément de raccordement selon l'une des revendications 1 à 6, **caractérisé en ce que** la partie fond (18) est de forme ovale, l'axe principal de l'ovale étant supérieur au diamètre extérieur du tronçon tubulaire (2) formant la partie tronc du Y, et l'axe annexe de l'ovale correspondant sensiblement à ce diamètre extérieur.

8. Elément de raccordement selon l'une des revendications 1 à 7, **caractérisé en ce que** les diamètres intérieurs des tronçons tubulaires (3, 4) formant les branches de Y sont élargis en allant vers l'extrémité libre des tronçons tubulaires (3, 4), en au moins un échelonnement(E₁), de préférence en deux échelonnements (E₁, E₂).

9. Elément de raccordement selon l'une des revendications 1 à 7, **caractérisé en ce que** le tronçon tubulaire (2) formant la partie tronc de Y et/ou les tronçons tubulaires (3, 4) formant les branches de Y ont une diminution échelonnée de diamètre extérieur lorsque l'on va vers l'extrémité libre des tronçons tubulaires (2, 3, 4).

10. Elément de raccordement selon l'une des revendications 1 à 9, **caractérisé en ce qu'**il est fabriqué en polyéthylène, de préférence en PE 100.
